# EUROPEAN PATENT APPLICATION

(11) **EP 0 677 498 A2**
(43) Date of publication of application: **18.10.1995**
(21) Application number: 95104461.9
(22) Date of filing: 27.03.1995
(51) Int. Cl.: C04B 38/00, F01N 3/02

(54) **Method of plugging selected open ends of a ceramic honeycomb structure**

(30) Priority: 12.04.1994 US 226817
(71) Applicant: CORNING INCORPORATED, Corning, N.Y. 14831 (US)
(72) Inventor: Guile, Donald Lloyd, Corning, NY 14831 (US); Krazinski, Jeanni Rachel, Corning, NY 14831 (US)
(74) Representative: Reinhard - Skuhra - Weise & Partner

(57) **Abstract**

A method is disclosed for sealing or plugging selected open cells or channels of a sinterable honeycomb structure such as a diesel particulate filter (DPF). The plugging material is applied from the bottom up using gravity and optionally, vibration forces to increase the flow of plugging material to the cell walls and enhance flow of material into any surface pores of the cell wall thereby increasing mechanical bonding of the plugging material to the cell walls. A unique plugging material containing glass and foaming agent is disclosed which upon heating melts and crystallizes to fill the cells and ensures good contact and bonding with the cell walls. Upon heating, the foaming agent causes the glass to foam and expand to seal any open spaces between the plug and the cell walls.

## Description

### BACKGROUND OF THE INVENTION

The invention relates to a plugging cement and method of selectively plugging or sealing open cells or channels of a honeycomb structure to obtain strong bonds between the plugs and the cell walls.

Honeycomb structures in which preselected open cells are sealed are useful for many applications for example, diesel particulate filters (DPF). Many methods are employed for the process of sealing open channels of a honeycomb structure. In the production of a plugged filter, an extruded honeycomb structure is dried and sintered to form a strong, coherent body. The sintered body is then plugged and after drying, the structure is again fired to sinter the plugging material. During the second firing or sintering step, the plug reacts and bonds to the cell walls or channels. If the plug has not filled the cells completely, upon firing, the plugging material densifies and may result in poor bonding. Also, weak plugs or missing plugs may result. To alleviate the above problems, it has been suggested to fire the honeycomb structure and the plugging material in one firing step.

In the most common approach, plugging is done by placing a sintered honeycomb structure in a plugging apparatus with the end face of the structure in which cells are to be sealed facing vertically upwards. Then preselected cells of the structure on the upward facing end face are sealed by applying a cement over the upward facing end face and applying force to press the cement into the cells. Any cells which are not plugged or from which plugs are missing are then sealed by hand one at a time. Besides the obvious tedium of this approach, a concern of this method is the lack of good bonding between the plugging material to the cell walls. Also, since the plugging cement is applied from a top to bottom (i.e, top-down direction), gravity tends to pull the cement downward and away from the cell walls thus forming a tapered or bullet-shaped plug with weak bonds to the cell walls.

Several methods have been suggested for producing plugged honeycomb structures. For example, it has been suggested to plug such structures by fitting a mask having protrusions onto a honeycomb surface so as to engage selected open cells of the honeycomb with the protrusions, and vibrating and rotating either the honeycomb structure or the mask until the protrusions engage the selected cells. In another approach, it is suggested to dip an end portion of a honeycomb structure into a sealing slurry mixture, and subsequently passing a kneaded paste into the ends of the channels on which the sealing slurry has been applied.

In addition, certain batch compositions have been suggested for forming the plugging material such as disclosed in U.S. Pat. No. 4,455,180 and in reissued U.S. Pat. No. Re. 31,405, both assigned to the assignee of this application, and both incorporated by reference herein.

According to the above methods, a thick water-based cordierite mixture is applied from the top, through masks to plug alternate cells of a honeycomb structure. Because the plugs are applied from the top down, there is no opposing force to ensure that the plugs spread to fill the respective cells completely. As a result, poor bonding may result leading to leakages and missing plugs.

There continues to be a need for better and improved composition and method of plugging honeycomb structures to obtain well bonded contacts between the plugging material and the cell walls.

### SUMMARY OF THE INVENTION

Briefly, it is an object of the invention to provide a method and composition for plugging the cells of a honeycomb structure to achieve good contact and bonding between the plugging material and the cell walls.

According to the invention, this and other objects of the invention are accomplished by providing a sintered honeycomb structure having a matrix of cell walls defining a plurality of cells extending longitudinally and mutually parallel therethrough between first and second opposing end faces of the honeycomb structure; mounting a ring outside a base plate; filling the ring with a layer of plugging material sufficient to plug the structure to a desired depth; providing a mask having at least one hole or opening corresponding to at least one open cell of the first opposing end face of the honeycomb structure to be sealed; centering the mask over the first opposing end face so that the hole or holes are in alignment with the open cell or cells of the first opposing end face; placing the substrate in the ring such that the masked first end face is in abutting contact with the plugging material; and applying force to the second opposing end face to press the plugging material into the cells through the hole or opening to seal the open cells of the honeycomb structure. The plugged honeycomb structure is then sintered to bond the plugging material to the cell walls.

To form a diesel particulate filter for example, after the first end face has been plugged as described above, the process is repeated in order to plug the second end face so as to form a honeycomb structure in which a first group of cells are open on the first end face and closed at the second end face, and a second group of the cells are closed on the first end face and open on the second end face, with each cell of the first group sharing cell walls with cells of the second group of cells.

In another aspect, the invention relates to a method of plugging alternate cells by using a plugging cement comprising beta-spodumene powdered glass and silicon carbide as a foaming agent. Upon heating, the glass melts and the silicon carbide causes the glass to foam and expand to seal any open regions between the plug and the cell walls.

### BRIEF DESCRIPTION OF THE DRAWINGS

FIG. 1 is a partially broken away, oblique view of a plugged honeycomb structure;
FIG. 2 is a schematic diagram illustrating the plugging method of the invention used to form the filter body of FIG. 1;
FIG. 3 is a comparative schematic diagram showing the tapered plugging and poor contact of the plugged structures of the prior art;
FIG. 4 is a schematic diagram showing the flat, more uniform plugging and increased contact and bonding between the plugging material and the cell walls of the plugged structure of the invention;
FIG. 5 is a photograph of plugged cells of the prior art using thick plugging pastes and showing open spaces and poor contact between the paste and the cell walls;
FIG. 6 is a photograph of plugged cells according to the method of the invention using the same thick paste of FIG. 5, but showing relatively good contacts and bonds with the cell walls;
FIG. 7 is a photograph of plugged honeycomb cells using the foaming cement of the invention and showing very good bonds and contact with the cell walls; and
FIG. 8 is a photograph illustrating the tunnelling effect which may result from very thin plugging pastes.

### DETAILED DESCRIPTION OF THE INVENTION

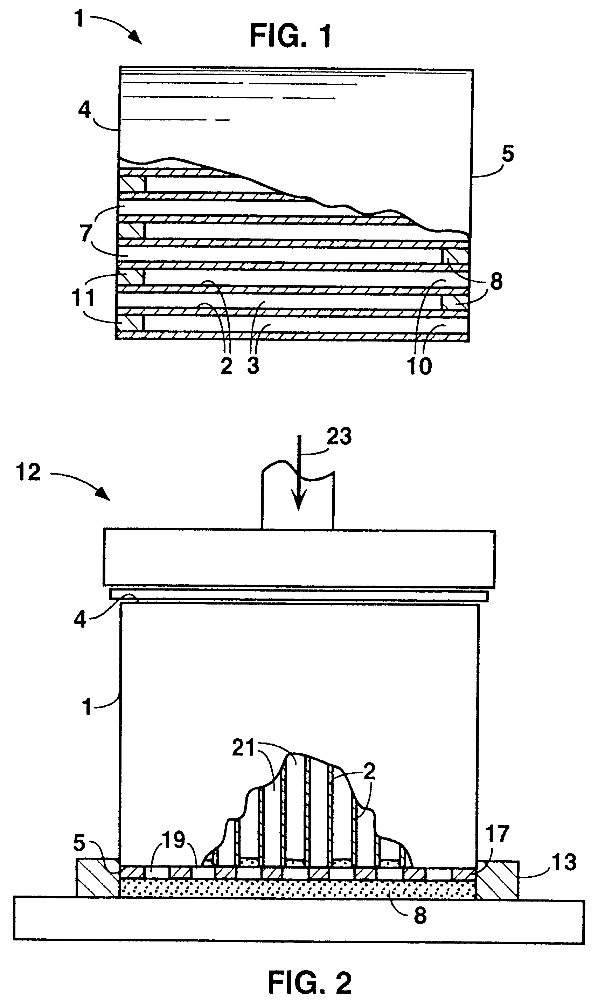

The method of the invention is described herein using the following preferred embodiments by referring to the drawings. The plugged honeycomb filter body 1 shown in FIG. 1 comprises a cellular or honeycomb structure 1 having a matrix of intersecting cell walls 2 defining a plurality of cells or channels 3, extending longitudinally and mutually parallel through the body 1 between opposing end faces 4 and 5 of the structure. As shown, one group of cells 7 are open at one opposing end face 4, but closed, sealed or plugged with a plugging material 8 on the other opposing end face 5. The other group of cells 10 which are open at opposing end face 5 are closed on opposing end face 4 by plugs 11. Both plugs 8 and 11 extend inwardly a certain desired distance from end faces 4 and 5. Thus, as viewed from end faces 4 and 5, the alternating open and closed cells or channels are in a checkered or checkerboard pattern.

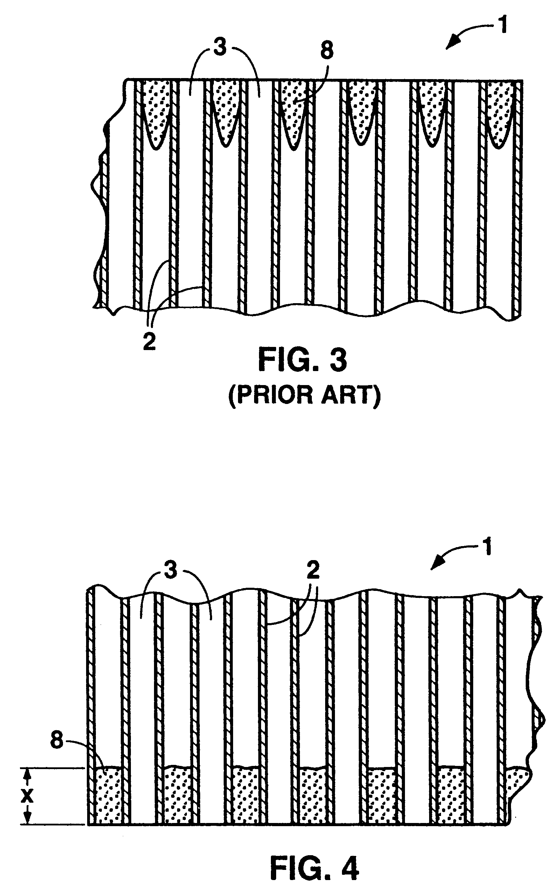

Referring now to FIG. 2, the method and apparatus 12 of the invention includes a ring body 13, mounted on a base plate or platform 15 which is optionally connected to a vibrator (not shown) to enhance the flow of plugging material 8 during the plugging process. The ring body 13 preferably has an inside diameter which fits the outside diameter of the honeycomb structure 1 to be plugged. The ring 13 is filled with a layer of plugging material 8 sufficient to plug the honeycomb structure to the desired depth x, as shown in FIG. 4. To form a first group of cells which are open on one end face of the structure and closed on an opposing end face, one end face of the honeycomb structure 1 is covered with a mask 17 having at least one hole or opening 19 such that the hole or opening is centered over at least one corresponding open cell 21 on either of the opposing end faces of the honeycomb structure 1 which open cell 21 is to be sealed. The result is that only the cell or cells to be sealed with plugging material are in alignment with corresponding holes in the mask 17. In FIG. 2, the end face 5 having the mask 17 thereon is then placed in the ring 13 so that end face 5 having the mask 17 thereon is in abutting contact with the plugging material 8. To force the plugging material into the open cell or cells 21, force is applied to the other opposing end face 4 of the honeycomb structure in the direction of the arrow 23 as shown in FIG. 2.

Any suitable material may be used for the mask for example, plastic and rice paper have been found to be useful for this purpose. Also, the base plate and ring body may be constructed of any suitable material, preferably any material which will not react with the plugging material, for example, plexiglass.

Optionally, the cells to be plugged may be pre-wetted before plugging by dipping the cells in water or a thin slurry of the plugging material. Pre-wetting is particularly useful when using very thick plugging material. Without intending to be bound by theory, it is believed that the presence of water or slurry on the cell walls keeps the paste or plugging material wet and aids in the filling of the cell by allowing the paste to flow to the cell walls thereby increasing the area of contact. After pre-wetting, the structure is partially dried to remove excess water and to achieve an optimum level of wetness for the consistency of the plugging material and then plugged. For thick pastes, we have found that the shorter the drying time of the pre-wetted structure after dipping in water or thin slurry, the better the plugging obtained.

Also, to assist with cell filling and improve contact, some vibrational force may be applied to the base plate as the plugging material is being forced into the cells. We have found that lower vibrational amplitudes are more effective than higher amplitudes particularly when using thick pastes. With thick pastes, high vibrational amplitudes appear to hinder cell filling and plugging by causing the plugging material to bounce around within the cells rather than spreading to fill the cell.

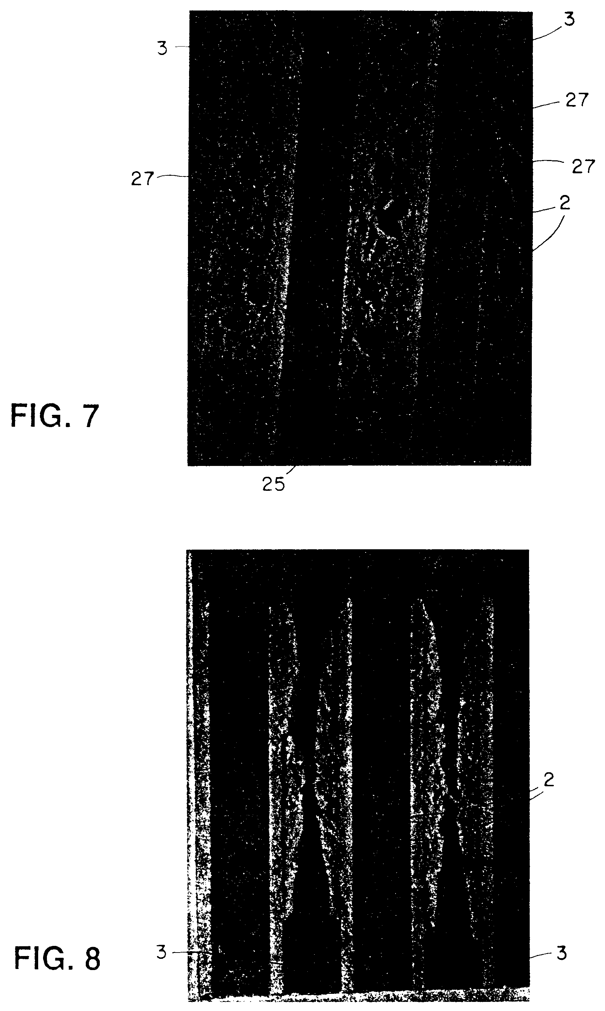

Process variables which may be controlled and adjusted to enhance the quality of plugging include the consistency or thickness of the plugging material, the amount and duration of force applied, amplitude of vibrational force, and length of drying time of a pre-wetted structure prior to plugging. Thick pastes tend to buckle in the cell walls leading to poor contacts while thin pastes tend to form dimples on the inside end of the plugs. For extremely thin pastes, the dimples become deeper and more pronounced sometimes forming tunnels through the plug as illustrated in FIG. 8.

To bond the plugging material to the cell walls the honeycomb structure, along with the plugs, is dried to remove any water contained in the plugging cement and then sintered at a suitable sintering temperature. The sintering temperature will vary depending on the plugging material used. For example, standard cordierite cement plugs may be sintered at temperatures of about 1400 C, while the foaming cement of the invention may be sintered at temperatures in the range of 900 to 1300 C.

To form a honeycomb structure in which a first group of cells are open on the first end face and closed at the second end face, and a second group of the cells are closed on the first end face and open on the second end face, with each cell of the first group sharing cell walls with cells of the second group of cells, such as suitable for a diesel particulate filter, after the first opposing end face is plugged, the honeycomb structure is turned so that the already plugged end face is facing upwards and the above process is repeated to plug the second group of cells on the opposing end face, before the drying and sintering steps.

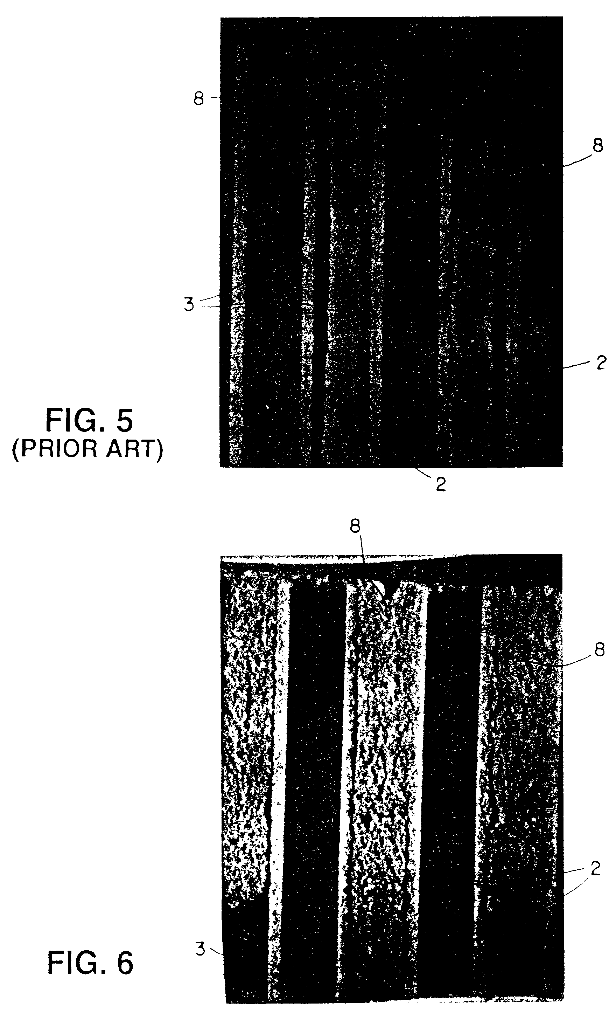

We have found that by plugging a honeycomb structure in the manner described above, that is, from the bottom up as illustrated in FIG. 2, more uniform and better bonded plugs are obtained. This is better illustrated by comparing comparative diagram FIG. 3 using the up-down plugging method of the prior art, with the plugs of the present invention FIG. 4. By plugging the holes using the bottom-up approach of the invention, the tapering effect and bullet-shaped plugs seen in FIG. 3, which are caused by gravity in the prior art method (up-down approach) is avoided and plugs exhibiting better bonding and contacts are obtained. Also, when plugging from the top-down, thick plugging cements tend to create a worm-like plug which twist and turn (i.e., buckle) in the cell thereby producing poor contacts and adhesion between the paste and the cell walls as shown in FIG. 5. By contrast, when the same thick paste is used to plug cells using the down-up approach of the invention, significantly improved bonding and contact is obtained as shown in FIG. 6.

The plugs can be formed using any suitable plugging material. Any plugging material which can adhere to cell walls and whose thermal properties are such that the plugging material can be sintered simultaneously with the honeycomb structure may be used for the method of the invention. Preferably, the plugging cement is applied to the cells after the honeycomb structure has been sintered. When the plugging is done after the honeycomb structure has been sintered, any plugging material can be used which can be sintered at a temperature less than or equal to the sintering temperature of the honeycomb structure. For cordierite honeycomb structures, the plugging material disclosed in U.S. Pat. Nos. 4,455, 180 and Re. 31,405, (both herein incorporated by reference) may be used.

We have found that excellent plugging and bonding can be obtained by using a plugging cement in which a suitable foaming agent has been added. In particular, we have found that superior plugging can be obtained by using a plugging cement comprising a beta-spodumene powdered glass in which silicon carbide has been added as a foaming agent. Upon firing, the composition first melts and then crystallizes to form a beta-spodumene phase. The silicon carbide causes the melted glass to foam and expand to fill any open spaces between the plug and the cell walls. The resulting structure exhibits the excellent bonds and contacts shown in FIG. 7. This is followed by crystallization of the beta-spodumene phase to form a beta-spodumene structure or foaming cement plug 25. After the beta-spodumene composition has foamed and filled the cells, the plugging cement 25 reacts with and bonds with the cell walls 2. The foam plugging cement 25 consists of closed bubbles 27 which limit or substantially prevent the passage of gases through the plugging material 25.

While any range of compositions which can crystallize upon firing to form beta-spodumene structure can be used for the invention, the following compositions were found to be particularly useful:

| | Composition | |
|---|---|---|
| | A | B |
| Beta-Spodumene glass powder | 80.32% | 80.43% |
| Zinc Oxide (AZO-66) | 4.45 | 13.84 |
| Calcium oxide | 8.71 | - |
| Silicon Carbide (600 grit) | 3.29 | 3.28 |
| Methocel^{R} A4M | 3.23 | 2.46 |
| Water | As needed | As needed |

Several cordierite honeycomb structures measuring 6 inches (15.24 cm) in diameter and having cell density of 100 cells per square inch (15.5 cell per square centimeters) were sintered at temperatures of about 1400°C and plugged as described above, using the above compositions. The plugged structures obtained from Compositions A and B were then fired and crystallized at temperatures 1085 and 1176°C respectively, using firing schedules in the range of 36 to 42 hours, depending on paste composition and size of the honeycomb structure. The appearance of the foamed plugs were similar to that of a foam cement or sponge FIG. 7. The porosity of the plugs 25 were greater than 50%, with an irregular pore structure. The cements were very tightly bonded to the cell walls and appeared to exhibit some reaction between the beta-spodumene plug 25 and the cordierite cell walls 2. In addition, the pores were formed by closed bubbles 27 which prevented gas flow through the plugs. As stated above, any composition which can crystallize upon firing to form beta-spodumene may be used for the invention.

We have found that by using a foaming cement as disclosed above, the quality of plugging obtained by traditional up-down approaches is significantly improved due to the enhanced filling and possible reaction with the cell walls achieved from foaming.

The amount of water needed to form the foaming cement will vary depending on the desired thickness or consistency of the resulting paste and the amount of force available or desired to plug the cells with the paste. For the above compositions, water content varied from 24 to 27% based on the mixture or about 33% based on the solids.

We have found that by using the foaming cement of the invention, bonding of plugs to cell walls is considerably enhanced even when the honeycomb structure is plugged using prior art methods in which the plugs are inserted into cells from the top down. This is because during firing, the foaming cement of the invention expands to fill the space between the tapered plugs and the cell walls, thus considerably sealing such plugs.

Any plugging cement having foaming characteristics can be used for the invention. For example, while not intending to be bound by theory, it is believed that since cordierite would be crystalline, it would not be able to trap any formed gases in order to create a foam. However, cordierite may be used if an appropriate additive can be added to cordierite to enhance gas entrapment and create foam. Also, any low eutectic glass close to the cordierite composition, in addition to compensating oxides which can react with the glass at the end of the firing schedule to form cordierite may also be useful for this application. The glassy stage would trap the gases to create foam to form good bonding with the cell walls, followed by reaction of the crystalline phase to form cordierite.

To increase the amount of contact between the plug and the cell walls, the cells to be plugged may first be wetted with water or preferably, a thin slurry of the plugging material prior to plugging. The thicker the plugging composition, the more desirable it may be to pre-wet the cells. The thinner the plugging material, the better the contact and the easier it is to plug the cells. However, when plugging is done using the top-down approach, very thin pastes may tend to drip down the cell walls and/or lead to tunnelling as described above. The proper thickness of the plugging material will vary depending on such operating conditions as the cell density and wall thickness of the honeycomb structure among others. The appropriate thickness for each application can be determined by experimentation. For example, we have found that cordierite plugging cements having up to 50% water based on solids can be used according to the method of the invention. However, while thinner pastes tend to give better contact between the plug and the cell walls, such pastes may result in tunneling, that is breaks, open passages or separations within the plug as shown in FIG. 8.

### Reference Numerals in the Drawings

- 1: honeycomb structure;
- 2: cell walls;
- 3: cells;
- 4,5: opposing end faces of the honeycomb structure;
- 7,10: groups of cells;
- 8,11: plugging material;
- 12: plugging apparatus of the invention;
- 13: ring body;
- 15: base plate;
- 17: mask;
- 19: open hole in mask;
- 21: open cell(s) to be sealed or plugged;
- 23: force direction;
- 25: foaming cement (plugging material);
- 27: bubbles; and
- x: desired depth of plugging material.

## Claims

1. A method of forming a honeycomb structure having plugged cells comprising the steps of:
providing a sintered honeycomb structure having a matrix of cell walls defining a plurality of cells extending longitudinally and mutually parallel therethrough between first and second opposing end faces of the honeycomb structure;
filling container means with plugging material to a desired depth;
providing a mask having at least one hole or opening corresponding to at least one open cell of the first opposing end face of the honeycomb structure to be sealed;
centering the mask over the first opposing end face so that said at least one hole is in alignment with said at least one open cell of the first opposing end face;
placing the honeycomb structure in the container such that the masked first end face is downward facing and is in abutting contact with the plugging material;
applying a force to the second opposing end face to press the plugging material into the cells through the hole or opening to seal the open cells of the honeycomb structure; and
firing the honeycomb structure to bond the plugging material to the cell walls.

2. The method of claim 1, wherein the plugging material comprises plugging cement and a foaming agent.

3. The method of claim 2, wherein the plugging material comprises about 80% beta-spodumene powdered glass, 4-15% zinc oxide, about 3% silicon carbide, 2-4% methylcellulose binder, and a sufficient amount of water to form a paste.

4. The method of claim 3, wherein the plugging material comprises about 24 to 27% water.

5. The method of claim 3, wherein the honeycomb structure is fired at a temperature in the range of 1000 to 1250°C.

6. Method according to any one of claims 1-5, wherein said container means is a ring mounted on a base plate or platform, filling the ring with a layer of plugging material sufficient to plug the structure to a desired depth, and placing the substrate in the ring such that the masked first endface is in abutting contact with the plugging material, before applying said force and firing the structure.

7. The method of claim 6, further comprising the step of vibrating the base plate while applying force to the second opposing end face, to enhance flow of the plugging material into the open cells of the substrate.

8. The method of claim 6, further comprising the steps of removing the honeycomb structure from the ring and sintering the sealed honeycomb structure to bond the plugging material to the cell walls.

9. The method of claim 8, further comprising the steps of:
centering the mask over the second opposing end face so that said at least one open hole of the mask is in alignment with at least one open cell of the second opposing end face, which cell is also open on the first opposing end face;
placing the substrate in the ring such that the masked second end face is downward facing and in abutting contact with the plugging material; and
applying a downward force to the first opposing end face to press the plugging material into the cells through the hole or opening to seal said at least one open cell of the honeycomb structure.

10. The method of claim 9, wherein the mask comprises a plurality of holes or openings positioned to form a honeycomb structure in which a first group of cells are open on the first end face and closed at the second end face, and a second group of the cells are closed on the first end face and open on the second end face, with each cell of the first group sharing cell walls with cells of the second group of cells.

11. The method of any one of the preceding claims, wherein the cells of the honeycomb structure are first wetted with water or a thin slurry of the plugging material prior to the plugging step.
